# EUROPEAN PATENT APPLICATION

(11) **EP 1 995 917 A1**
(43) Date of publication of application: **26.11.2008**
(21) Application number: 06729253.2
(22) Date of filing: 16.03.2006
(51) Int. Cl.: H04L 12/56

(54) **COMMUNICATION NODE AND COMMUNICATION ROUTE SELECTION METHOD**

(71) Applicant: Fujitsu Ltd., Kawasaki-shi, Kanagawa 211-8588 (JP)
(72) Inventor: KIMURA, Bun, Kawasaki-shi Kanagawa 211-8588 (JP); IKEDA, Eiji, Kawasaki-shi Kanagawa 211-8588 (JP)
(74) Representative: Stebbing, Timothy Charles
(86) International application number: PCT/JP2006/305260
(87) International publication number: WO 2007/108054

(57) **Abstract**

A communication node quickly determines a suitable route for packet transmission. The communication node includes a communicating part connected to one or more communication ports, a deriving part configured to derive route candidates for transmitting a packet to a destination node with a connectionless oriented method, and a selecting part configured to select one of the communication ports to be used for transmitting the packet. The deriving part includes a user designation logic part configured to derive one or more of the route candidates with a logic designated by a user, a connection data processing part configured to select one or more of the route candidates based on connection data of each route, and a part configured to exclude at least a route passing a destination port having an unknown medium access control (MAC) address from the route candidates. The packet is transmitted from a communication port corresponding to the route that has not been excluded.

## Description

### TECHNICAL FIELD

The present invention generally relates to a communication node and a communication route selecting method used for a communication system having plural communication routes between communication nodes.

### BACKGROUND ART

In a network such as an IP network using the Internet Protocol, plural routes exist between communication nodes. Typically, packet transmission routes in the IP network are managed with a routing protocol. For example, in a case where a route becomes unusable, a bypass route is searched for, then a routing table is changed, and then packet transmission is conducted with an alternative route (bypass route). Patent Document 1 discloses a technology for establishing combinations of routes that can be altered in view of an upper layer protocol and a lower layer protocol when generating a connection in a connection oriented communication system.
Patent Document No.1 Japanese Patent Application No. 6-14088

### DISCLOSURE OF THE INVENTION

### Problem to be solved by the invention

However, control by using the routing protocol requires time and it is difficult to quickly change routes according to communication status. When a change to a bypass route is delayed in such a case, packets may be lost. Loss of some packets might not significantly degrade communication quality in a case of non-real time data communications. However, in a case of real time data communications such as audio communications or television phone communications, loss of packets significantly affects communication quality. Although the invention disclosed in Patent Document 1 may establish the most suitable route at the time of generating a connection, the connection is maintained in a constant state between the time of its establishment and the time of its release and it is not possible to realize quick route change in the middle of communications. Thus, there is still a concern regarding the above-described problem.

The present invention is conceived in view of the above-described problem and is aimed to provide a communication node and a communication method for quickly determining an appropriate route for packet transmission.

### Means for solving problem

In the present invention, a communication node, which includes a communicating part connected to one or more communication ports, a deriving part configured to derive route candidates for transmitting a packet to a destination node with a connectionless oriented protocol, and a selecting part configured to select one of the communication ports to be used for transmitting the packet, is used. The deriving part includes a user designation logic part configured to derive one or more of the route candidates with a logic designated by a user, a connection data processing part configured to select one or more of the route candidates based on connection data of each route, and a part configured to exclude at least a route passing a destination port having an unknown medium access control (MAC) address from the route candidates. The packet is transmitted from a communication port corresponding to the route that has not been excluded.

### Advantage of the Invention

With the present invention, a suitable route for transmitting packets in a connectionless oriented communication system can be quickly determined.

### BRIEF DESCRIPTION OF THE DRAWINGS

Fig.1 is a schematic diagram of a communication system according to an embodiment of the present invention;
Fig. 2A is a schematic diagram showing the manner in which packets are transmitted according to a connection oriented communication method;
Fig. 2B is a schematic diagram showing the manner in which packets are transmitted according to a connectionless oriented communication method;
Fig. 3 is a detailed block diagram showing a communication node according to an embodiment of the present invention;
Fig. 4A is a table showing an example of connection data;
Fig. 4B is a table showing another example of connection data; and
Fig. 5 is a schematic diagram showing an example of route selection according to an embodiment of the present invention.

| Explanation of Reference numerals | |
|---|---|
| NIC#0-#3 | communication port |
| Maintenance IF | maintenance interface part |
| 31 | data receiving part |
| 32 | data transmitting part |
| 33 | control data processing part |
| 34 | protocol processing part |
| 35 | route candidate deriving part |
| 361 | NIC link status monitoring part |
| 362 | ARP resolution status monitoring part |
| 3631 | first usability determining part |
| 3632 | second usability determining part |
| 3633 | third usability determining part |
| 364 | user designation managing part |
| 365 | ARP processing part |
| 366 | route connection monitoring part |

### BEST MODE FOR IMPLEMENTING THE INVENTION

According to an embodiment of the present invention, when considering candidates of routes for transmitting packets, one or more route candidates are derived according to logic designated by a user (layer 4/5), one or more route candidates are selected based on connection data of each route (layer 3), at least a route passing a destination port having an unknown MAC address is excluded from the route candidates (layer 1, 2), and packets are transmitted from a communication port corresponding to the route that has not been excluded. Since a final route is determined by considering route candidates in various upper and lower layers, a highly reliable route can be suitably derived. Because selection is performed on routes according to a connectionless oriented method, the route can be quickly and alterably selected with respect to each packet.

The connection data may be managed in correspondence with each destination and each communication port. The connection data may be reported from an outside managing apparatus. The connection data may be updated at a constant cycle.

In a case where the connection data indicate that all of the communication ports cannot be used, a route corresponding to any one of the communication ports of the destination node is retained in the route candidates. Since the connection data do not necessarily match the actual conditions, packets may be actually transmittable even if the connection data are NG. Therefore, packets, being planned to be transmitted, are transmitted as much as possible (rather than being discarded). Accordingly, the amount of packets stored in a transmission buffer can be reduced as much as possible.

The logic designated by the user may include a criterion for determining a communication port to be selected so that the frequency in which the plural communication ports is the same. For example, the remainder obtained in a case of dividing a port number of a communication port with the total number of communication ports is associated to a route number.

The logic designated by the user may include a criterion for determining a communication port to be selected so that the frequency in which a specific communication port is used becomes higher.

### [First Embodiment]

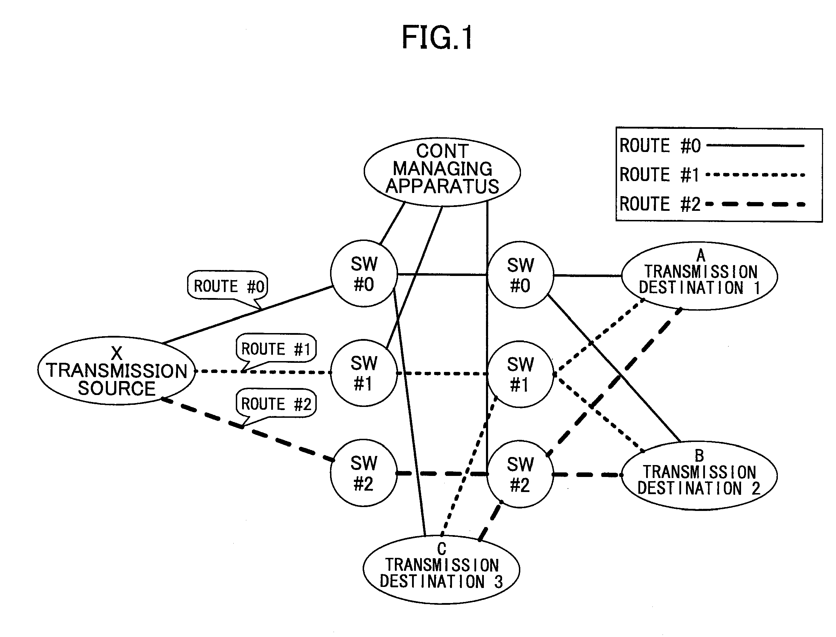

Fig. 1 is a schematic diagram showing an example of a communication system according to an embodiment of the present invention. Fig. 1 shows four communication nodes X, A, B, C, six switches (SW), a managing apparatus (CONT), and transmission routes connected to each of these elements.

Each communication node can communicate with each other. In the example shown in Fig. 1, the communication node X is a transmission source, and the other communication nodes A, B, C are transmission destinations or destinations. Each of the communication nodes, when in a normal state, is connected to each other. There may be more than one route connecting the communication nodes. In the example shown in Fig. 1, there are three routes #0, #1, and #2 between the transmission source X and the transmission destination A, in which the routes are independent from each other. Likewise, there are three routes #0, #1, and #2 between the transmission source X and the transmission destination B, in which the routes are independent from each other. There are also three routes #0, #1, and #2 between the transmission source X and the transmission destination C. The routes may be designated by using various methods. For example, the routes may be designated based on the combination of the number of a communication port and a destination.

The switch (SW) is also a router which transfers a packet(s) according to a routing table.

The managing apparatus (CONT) is for conducting maintenance and management with respect to each element in the communication system. The number of nodes, routes and the like is simply an example. The nodes, routes and the like may be used in any suitable number.

A connectionless oriented method is used in the communication system shown in Fig. 1. The connectionless oriented method, unlike the connection oriented method, is able to have plural communication routes existing in a single connection.

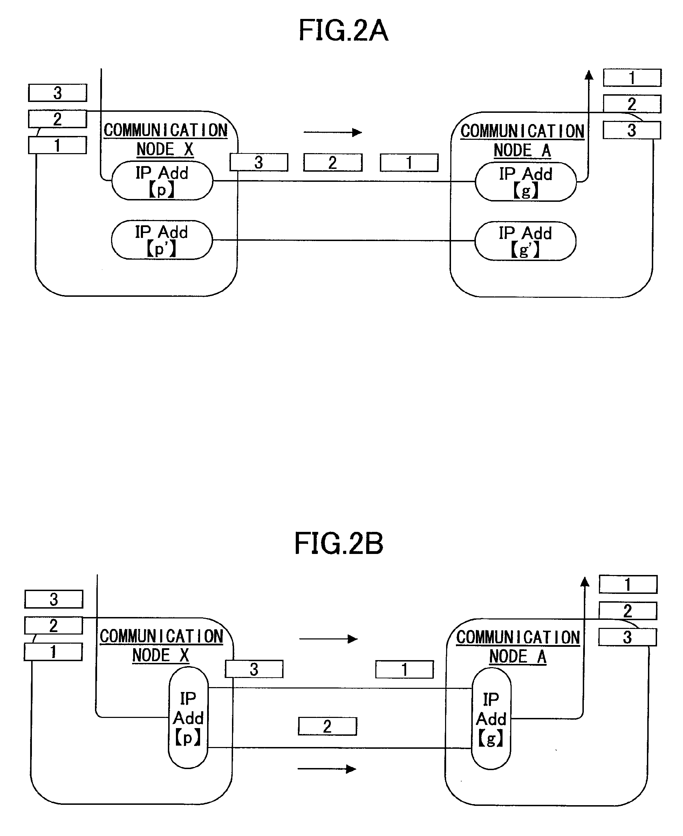

Fig. 2A is a schematic diagram showing the manner in which packets are transmitted by using the connection oriented method. When transmitting first-third packets from the communication node X to the communication node A in the example shown in Fig. 2A, a single combination of ports is determined and all of the packets are transmitted by using a route corresponding to the determined combination. The connection is maintained in a constant state between the time of its establishment and the time of its release.

Fig. 2B is a schematic diagram showing the manner in which packets are transmitted by using the connectionless oriented method. A suitable combination of ports among the ports available for packet transmission is selected with respect to each packet. Each packet is transmitted by using a route corresponding to the selected combination. Thus, each of the first-third packets is routed independently. Different communication routes can be used for each packet. The packets can arrive in different order. Accordingly, there is no need to define a single transmission route prior to transmitting packets, and a suitable communication route can be alterably determined for each packet.

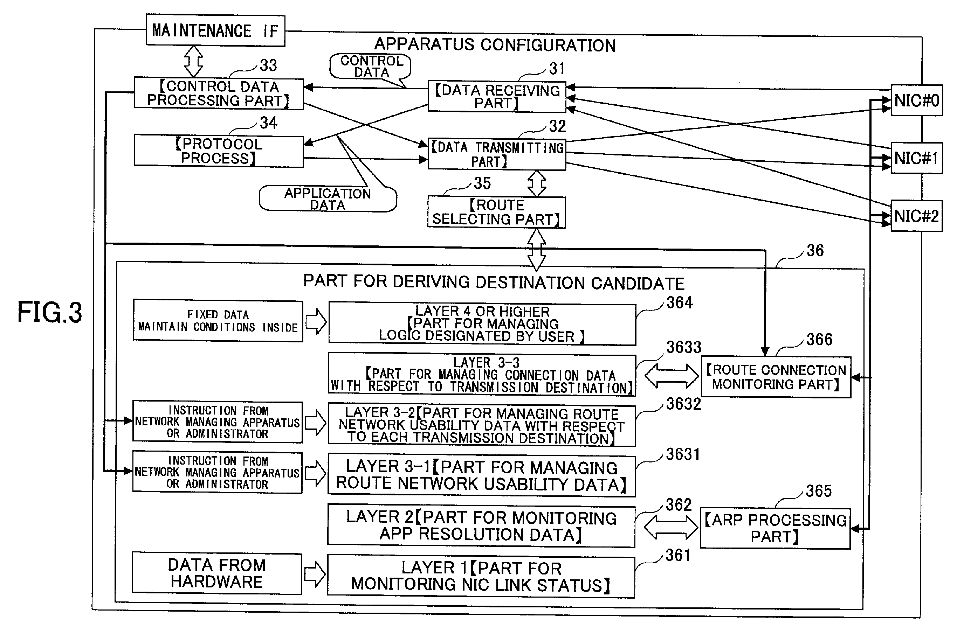

Fig. 3 is a detailed block diagram showing a communication node according to an embodiment of the present invention. Although this communication node may be any one of the communication nodes X, A, B, and C of Fig. 1, this communication node is explained as the communication node X for the sake of convenience. Fig. 3 shows three communication ports indicated as NIC #0-#2, a maintenance interface part indicated as maintenance interface IF, a data receiving part 31, a data transmitting part 32, a control data processing part 33, a protocol processing part 34, a route selecting part 35, and a route candidate deriving part 36. The route candidate deriving part 36 includes a NIC link status monitoring part 361, an ARP resolution status monitoring part 362, a first usability determining part 3631, a second usability determining part 3632, a third usability determining part 3633, a user designation managing part 364, an ARP processing part 365, and a route connection monitoring part 366.

The communication ports (NIC: Network Interface Card) #0-#2 are physical ports used for packet communications.

The maintenance interface part (maintenance IF) is a physical port that is used when performing maintenance and/or management on the communication node X1 from outside the communication node X1.

The data receiving part 31 is for receiving packets received by each of the communication ports #0-#2 and routing the packets to a suitable processing element. More specifically, the processing element is, for example, the control data processing part 33 or the protocol processing part 34.

The data transmitting part 32 is for transmitting data to be transmitted to a transmission destination. In a case of transmitting the data to be transmitted, the data transmitting part 32 receives guidance regarding a transmission destination route from the route selecting part 35.

The control data processing part 33 is for processing control data received by the data receiving part 31. When the data to be transmitted are generated by the control data processing part 33, the data are transferred to the data transmitting part 32.

The protocol processing part 34 is for processing application data received by the data receiving part 31. When the data to be transmitted are generated by the protocol processing part 34, the data are transferred to the data transmitting part 32.

The route selecting part 35 is for determining an optimum route based on route candidates derived by the route candidate deriving part 36 and data regarding the packets to be transmitted and reporting the result of the determination to the data transmitting part 32.

The route candidate deriving part 36 is for deriving a route having the possibility of becoming the optimum route (route candidate) from various routes when transmitting packets to a given destination.

The user designation managing part 364 is for managing a route selection logic set (designated) by the user based on protocol data of an upper layer that is equal to or higher than layer 4. The route selection logic may be set in various ways. For example, a communication port can be determined for enabling packets to evenly flow in each communication port (NIC#0-#2) (in other words, so that bandwidth is evenly used). For example, a communication port may be selected according to a remainder of dividing a first lowest digit of a port number (decimal) of a protocol (e.g., UDP, GTP-U, SCTP) with the number of ports (in this example, 3).

For example, in a case where the port number of UDP is 6, the remainder of dividing 6 with 3 is 0. Therefore, route #0 is selected. In a case where the port number of UDP is 7, route #1 is selected. In a case where the port number of UDP is 8, route #2 is selected.

Alternatively, a specific communication port may be preferentially used. For example, the communication port may be used from an ascending order or from a descending order. Furthermore, the communication port may be selected according to a round robin method.

In any case, the user may select a route candidate based on logic or a rule that enables a route to be selected. In this embodiment of the present invention, the user designation managing part 364 does not discard the packets to be transmitted even in a case where there is no route matching the content designated by the user. In this case, it is assumed that at least one route or communication port matches the logic designated by the user.

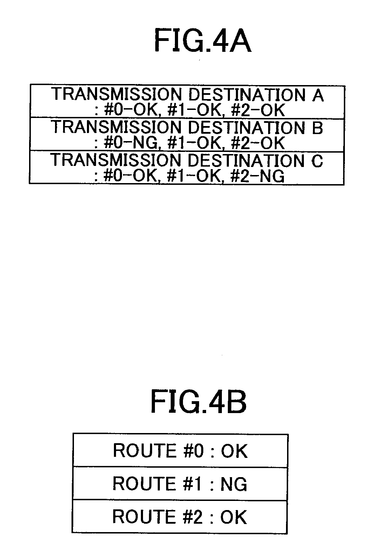

The third usability determining part 3633 is for deriving a route candidate based on connection data with respect to each route. This process belongs to layer 3. As described above, a route may be designated by a combination of the communication port and the destination. The third usability determining part 3633 determines whether packets can be transmitted from the communication ports NIC #0-#2 to each destination node A, B, C. More specifically, the third usability determining part 3633, cooperating with the route connection monitoring part 366, transmits a detection signal (e.g., ping signal) from the communication node NIC #0 to the destination node A and determines whether an arrival confirmation or an affirmative response signal is received. If it is received, the route can be used (managed as an OK state). If it is not received, the route cannot be used (managed as an NG state). In this example, since three communication ports NIC #0-#2 with respect to each of the three destination nodes A, B, and C are subject to the detection, a total of nine detection results are obtained as shown in Fig. 4A.

Although connection data may be updated regularly or irregularly, connection data are typically reported at a constant period.

The third usability determining part 3633 does not discard the packets to be transmitted even in a case where all of the routes are NG. In this case, it is assumed that at least one route or communication port matches the logic designated by the user. This is because, in a case where connection data are not updated frequently (low frequency), it is possible that the routes may not be NG at the time of transmitting packets later on.

The second usability determining part 3632 also derives a route candidate based on connection data with respect to each route. This process also belongs to layer 3. The connection data used by the second usability determining part 3622 are reported from an upper level apparatus such as the managing apparatus (CONT) shown in Fig. 1 and not measured by the node itself. The connection data used by the second and third usability determining parts primarily indicate the same content but may be different depending on circumstance. For example, even if the route #0 between the communication node X and the communication node B is determined as NG at the transmission source X, it may not be determined as NG at the transmission destination B. This may occur depending on the location at which a failure occurs or the length of delay of a route. In such a case, by having an upper level managing apparatus report connection data to each communication node, each communication node can obtain connection data corresponding to actual conditions. The reporting of connection data from the managing apparatus to each connection node may be conducted regularly or irregularly. Typically, the reporting is irregularly conducted according to necessity. For example, the reporting of connection data may be conducted in a case where a failure occurs in a route or a case of performing maintenance on a route.

The same as the third usability determining part 3633, the second usability determining part 3632 does not discard the packets to be transmitted even in a case where all of the routes are NG. In this case, it is assumed that at least one route or communication port matches the logic designated by the user. This is because, in a case where connection data are not updated frequently, it is possible that the routes may not be NG at the time of transmitting packets later on.

The first usability determining part 3631 also derives a route candidate based on connection data with respect to each route. This process also belongs to layer 3. The connection data used by the first usability determining part 3631 are reported from an upper level apparatus such as the managing apparatus (CONT) shown in Fig. 1 and not measured by the node itself. The connection data used in this case are managed with respect to each route as shown in detail in Fig. 4B. Therefore, without relying on the destination, usability is indicated with respect to each communication port NIC #0-#2 or each route #0-#2. For example, in a case where both of the two switches SW#0 of Fig. 1 are receiving maintenance, none of the communication nodes can use the route #0. In this case, it is theoretically possible for the managing apparatus to include the connection data shown in Fig. 4B in the connection data shown in Fig. 4A. However, it is preferable to separately manage the two kinds of communication data from the aspect of promptly reporting such a situation with a small amount of data to each communication node.

The same as the second and third usability determining parts, the first usability determining part 3631 does not discard the packets to be transmitted even in a case where all of the routes are NG. In this case, it is assumed that at least one route or communication port matches the logic designated by the user. This is because, even if the connection status at the time of receiving a report from the managing apparatus is NG, it is possible that the connection status may not be NG at the time of transmitting packets later on.

The ARP resolution status monitoring part 362 is for determining whether an IP address and MAC address of a transmission destination is known and managing a relationship of the addresses. If the OP address and the MAC address of the transmission destination are unknown, packets cannot be transmitted to the corresponding port. Therefore, a route passing through an unknown port is excluded from the route candidates.

According to an embodiment of the present invention, in a case where a route including a port having an unknown address is found with the cooperation of the ARP processing part 365, an address (more specifically, MAC address) of the port becomes apparent and is updated in an address managing table to be used later on. This process may be conducted by using ARP (ARP: Address Resolution Protocol). Basically, with this method, a packet (ARP request) including an IP address subject to determination is broadcasted. The single node having the corresponding IP address sends a response to the transmission source together with its MAC address. In a case where the address necessary for packet transmission is known, it is handled as "ARP resolved". In a case where the address necessary for packet transmission is unknown, it is handled as "ARP unresolved". In a case where all route candidates with respect to a given destination node are unresolved, packets cannot be transmitted to the destination node. Therefore, the packets are discarded.

The NIC link status monitoring part 361 is for monitoring the link status of the connection end corresponding to each communication port (NIC) and determining whether the communication port and the connection end are physically connected. In the example shown in Fig. 1, the connection end corresponding to the communication port (NIC) is indicated as a switch (SW). A change of the link status can be detected by interruption from hardware. For example, when a communication node or a switch is connected or disconnected, the status of physical connection changes, and then the link status is updated. For example, the link status may be managed as a Link-Up status and a Link-Down status. A route being in a Link-Up status is included as a route candidate whereas a route being in a Link-Down status is excluded from a route candidate. In a case where all route candidates with respect to a given destination node are in a Link-Down status, packets cannot be transmitted to the destination node. Therefore, the packets are discarded.

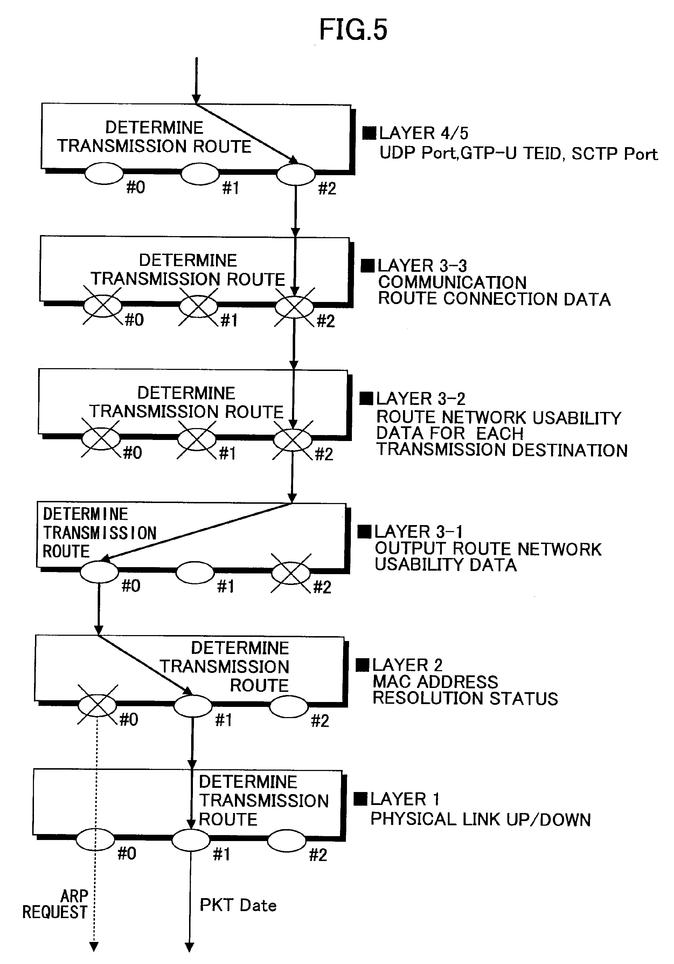

Fig. 5 is a diagram showing an example of selecting a route(s) according to an embodiment of the present invention. In a case where three communication ports and three transmission destinations exist, it is supposed that a communication node seeks to select a suitable route for transmitting packets. Fig. 5 basically illustrates an operation conducted by the route candidate deriving part 36 and the route selecting part 35 of Fig. 3. The data bound for a given destination are either transmitted to one of the communication ports NIC #0, #1 or #2 or discarded. However, according to an embodiment of the present invention, the packets are discarded only in a case where there is no suitable route in the ARP resolution status monitoring part 362 or the link status monitoring part 361. Meanwhile, in a case where there is no suitable route in the parts other than the ARP resolution status monitoring part 362 or the link status monitoring part 361, one of the routes is assumed to be suitable so as to avoid discarding of packets as much as possible.

For example, when deriving a suitable route candidate for a route from the communication node X to the communication node A, the route candidate deriving part 36 of the communication node X derives route candidates by using the user designation managing part 364 (layer 4/5). Although any of the communication ports can be used, in this embodiment of the present invention, a specific port is selected from the aspect of decentralizing the workload. In this embodiment of the present invention, a communication port (communication port #2 in the example shown in Fig. 5) corresponding to a remainder of dividing a first lowest digit of a port number (decimal) with 3 (number of ports) is selected. However, other communication ports are not restricted from being used. As described below, other communication ports may be selected.

Then, in the third usability determining part 3633 (layer 3-3), usability of routes is determined based on connection data measured by the node itself. In the example shown in Fig. 5, all of the communication ports are NG with respect to the destination node A. Therefore, all of the communication ports #0-#2 are marked with an X. As described above, the packets to be transmitted are not discarded at this stage. Instead, it is assumed that the communication status of one or more communication ports is OK. In this example, since communication ports other than communication port #2 are usable in the user designation managing part 364 (layer 4/5), the communication ports #0 or #1 can also be selected in the layer 3-3. However, by selecting (inheriting) the same port selected in layer 4/5 also in layer 3, the user's choice in layer 4/5 can reflect on the route candidates.

In the second usability determining part 3632 (layer 3-2), usability of routes is determined based on connection data reported from the managing apparatus. In the example shown in Fig. 5, all of the communication ports are NG with respect to the destination node A. Thus, all of the communication ports #0-#2 are marked with an X. As described above, the packets to be transmitted are not discarded at this stage. Instead, it is assumed that the communication status of one or more communication ports is OK. The same as the process of layer 3-3, the communication port #2 is selected.

In the first usability determining part (layer 3-1), usability of routes are determined based on connection data of each route reported from the managing apparatus. In the example shown in Fig. 5, the communication port #2 is NG with respect to the destination node A, and the communication ports #0 and #1 are OK. In the example shown in Fig. 5, the communication port #0 is selected. Determining whether to select the communication port #0 or the communication port #1 can be conducted according to various criteria. For example, the second optimum candidate can be selected according to a criteria used for selection in the layer 4/5.

In the ARP resolution status monitoring part 362 (layer 2), usability of routes is determined according to the status of knowing an address. In the example shown in Fig. 5, the MAC address with respect to the communication port #0 of the destination node A is unknown. Thus, ARP is unresolved with respect to the communication port #0. However, the addresses of the remaining ports are known (ARP resolved). Therefore, either the communication port #1 or the communication port #2 is selected for the route. In the example shown in Fig. 5, the route passing through the communication port #1 of the destination node A is selected. In Fig. 5, it is to be noted that the communication ports #0, #1, and #2 of layer 2 are communication ports of the destination node A and the communication ports #0, #1, and #2 of other layers are communication ports of the node itself.

According to an embodiment of the present invention, measures are taken for revealing the MAC address of the ARP unresolved communication port. More specifically, an ARP request including an IP address corresponding to the unknown MAC address is broadcasted. Accordingly, a relationship between the IP address and the MAC address is obtained based on a response from a communication node corresponding to the IP address. This relationship is used for route searching for transmitting packets the next time. Although it is theoretically possible to add the revealed MAC address for the current route searching, it is not recommended from the aspect of shortening the delay time and selecting a suitable route.

In the NIC link status monitoring part 361 (layer 1), the routes are narrowed down to a final route based on the status of physical connection. In the example shown in Fig. 5, packets bound for the destination node A are transmitted from the communication port #1.

By comprehensively determining the route candidates derived by each processing part, a suitable route having a comparatively high reliability can be selected. For the sake of convenience, the processes performed by the processing parts are described above in an order from an upper layer to a lower layer. However, this is not a requisite. For example, the processes in layers 3-1, 3-2, and 3-3 may be performed in different order. Furthermore, the content of the route candidates for each processing part may be provided as a table for selecting an optimum route. As long as all of the route candidates for each processing part are comprehensively considered, other processes may be used.

Further, the present invention is not limited to these embodiments, but variations and modifications may be made without departing from the scope of the present invention.

## Claims

1. A communication node **characterized by** comprising:
a communicating part connected to one or more communication ports;
a deriving part configured to derive route candidates for transmitting a packet to a destination node with a connectionless oriented method; and
a selecting part configured to select one of the communication ports to be used for transmitting the packet;
wherein the deriving part includes
a user designation logic part configured to derive one or more of the route candidates with a logic designated by a user,
a connection data processing part configured to select one or more of the route candidates based on connection data of each route, and
a part configured to exclude at least a route passing a destination port having an unknown medium access control (MAC) address from the route candidates,
wherein the packet is transmitted from a communication port corresponding to the route that has not been excluded.

2. The communication node as claimed in claim 1, **characterized in that** the connection data processing part includes a part configured to select a route based on connection data managed in correspondence with each destination and each communication port.

3. The communication node as claimed in claim 1, **characterized in that** the connection data processing part includes a part configured to select a route based on connection data managed in correspondence with each route.

4. The communication node as claimed in claim 2, **characterized in that** the connection data processing part is configured to select a route from the route candidates based on connection data measured by the node itself in correspondence with each route.

5. The communication node as claimed in claim 4, **characterized in that** the connection data are updated at a constant cycle.

6. The communication node as claimed in claim 2, **characterized in that** the connection data processing part includes a part configured to select a route from the route candidates based on connection data reported from a managing node that manages routes.

7. The communication node as claimed in claim 1, **characterized in that** a query signal is transmitted to another node so that the unknown MAC address becomes apparent.

8. The communication node as claimed in claim 1, **characterized in that** in a case where the connection data indicate that all of the communication ports with respect to a given destination node cannot be used, a route corresponding to any one of the communication ports of the destination node is retained in the route candidates.

9. The communication node as claimed in claim 1, **characterized in that** the logic designated by the user has a determination criterion for selecting a communication port so that the frequency in which the plural communication ports are used is the same.

10. The communication node as claimed in claim 9, **characterized in that** the remainder in a case of dividing a port number of a communication port with the number of communication ports is associated to a route number.

11. The communication node as claimed in claim 1, **characterized in that** the logic designated by the user has a determination criterion for selecting a communication port so that the frequency in which a specific communication port is used becomes higher.

12. A route selecting method for selecting a route for transmitting a packet with a connectionless oriented method between one or more communication ports of each communication node, **characterized by** comprising:
a step of deriving route candidates with a logic designated by a user;
a step of deriving route candidates based on connection data of each route; and
a step of excluding at least a route passing a destination port having an unknown medium access control (MAC) address from the route candidates;
wherein the packet is transmitted from a communication port corresponding to a route that has not been excluded.
